# EUROPEAN PATENT APPLICATION

(11) **EP 4 614 423 A1**
(43) Date of publication of application: **10.09.2025**
(21) Application number: 23885478.0
(22) Date of filing: 10.10.2023
(51) Int. Cl.: G06Q 50/04

(54) **ENVIRONMENTAL LOAD EVALUATING DEVICE AND METHOD**

(30) Priority: 04.11.2022 JP 2022177318
(71) Applicant: Hitachi, Ltd., Tokyo 100-8280 (JP)
(72) Inventor: HONG Younjeong, Tokyo 100-8280 (JP); NISHIKAWA Kenji, Tokyo 100-8280 (JP); YOSHII Yuki, Tokyo 100-8280 (JP)
(74) Representative: Mewburn Ellis LLP
(86) International application number: PCT/JP2023/036723
(87) International publication number: WO 2024/095715

(57) **Abstract**

To achieve efficient environmental evaluation for objects, such as products, that also takes into account development goals.

An environmental load evaluating device 100 for evaluating an environmental load of a product includes a product group specification unit 11 that specifies a product group that is an evaluation target for the environmental load, an environmental navigation specification unit 12 that specifies a development goal corresponding to the specified product group and specifies a plurality of environmental navigation items corresponding to the specified development goal, the plurality of environmental navigation items being items that affect environmental loads in a life cycle of the product group, and an environmental evaluation item extraction unit 13 that extracts environmental evaluation items associated with the environmental navigation items and being evaluation units in evaluation of the environmental load.

## Description

### Technical Field

The present invention relates to a technique for evaluating the environmental loads of objects such as products.

### Background Art

In recent years, with higher environmental consciousness, evaluation of environmental loads of objects such as products and parts has been required in planning and designing. In particular, in product design, there is a need to provide environmental consideration designs (ecological designs) and product LCA. Patent Literature 1 proposes a technique for calculating and evaluating such environmental loads.

An object in Patent Literature 1 is to "easily perform accurate and rapid life cycle assessment (LCA) evaluation in accordance with a product configuration". For this, Patent Literature 1 discloses an environmental load calculation device "including a storage unit that stores, in advance, parts table information specifying a hierarchical structure of components configuring a product, basic unit information in which basic units of environmental loads are associated in advance with the types of the components, and production process information capable of specifying the environmental loads in a process of producing the components, a basic unit specification unit that associates basic units of environmental loads with components located at a lower level among components with which the basic units of the environmental loads are associated and in which environmental loads in a process of producing higher-level component in the hierarchical structure specified by the part table information, and an environmental load calculation unit that calculates an environmental load by using basic units of environmental loads according to the types of the components and the environmental loads in all processes of producing the higher-level components configured with the components.

### Citation List

### Patent Literature

Patent Literature 1: Japanese Patent Application Publication No. 2014-93035

### Summary of Invention

### Technical Problem

Here, various types of objects are handled in development. For this reason, efficient evaluation of environmental loads is required. In addition, environmental loads are linked to development goals, and this needs to be considered for more efficient environmental evaluation.

However, in Patent Literature 1, environmental evaluation is performed using basic unit data separately from a development goal. For this reason, a development goal is not sufficiently considered in environmental evaluation. Consequently, an object of the present invention is to achieve efficient environmental evaluation that also takes into account a development goal. Solution to Problem

In order to solve the above problem, in the present invention, an environmental evaluation item associated with each of a plurality of environmental navigation items in an object is extracted. More specifically, an environmental load evaluating device for evaluating an environmental load of a product is an environmental load evaluating device including a product group specification unit configured to specify a product group that is an evaluation target for the environmental load, an environmental navigation specification unit configured to specify a development goal corresponding to the specified product group and specify a plurality of environmental navigation items corresponding to the specified development goal, the plurality of environmental navigation items being items that may affect environmental loads in a life cycle of the product group, and an environmental evaluation item extraction unit configured to extract environmental evaluation items associated with the environmental navigation items and being evaluation units in evaluation of the environmental load. The present invention also includes an environmental load evaluation method using an environmental load evaluating device. Advantageous Effects of Invention

It is possible to achieve efficient environmental evaluation that also takes into account development goals for objects such as products.

### Brief Description of Drawings

[Fig. 1]

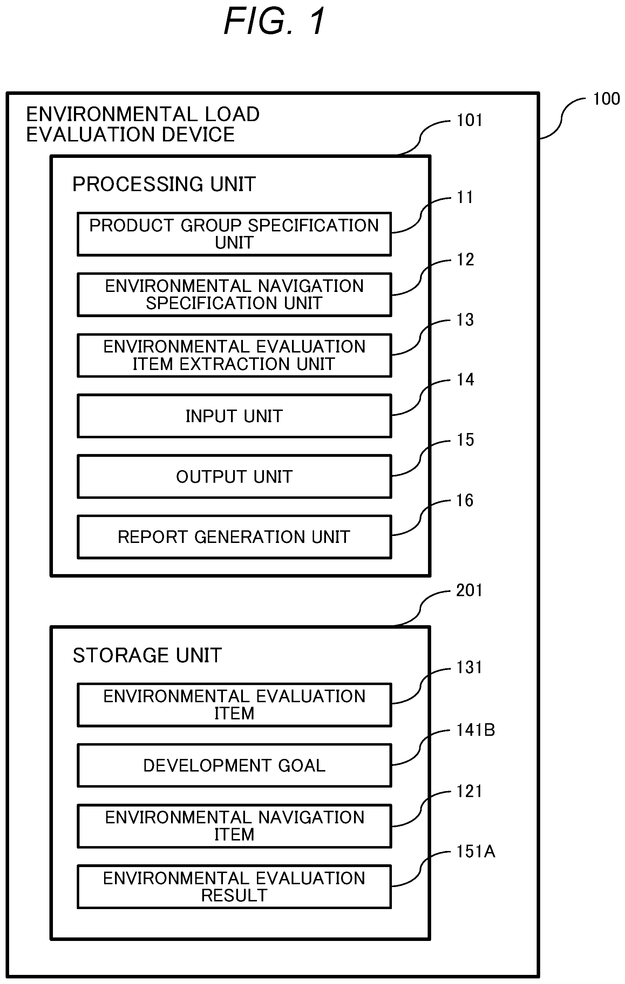

   Fig. 1 is a functional block diagram of an environmental load evaluating device 100 according to an embodiment of the present invention.
[Fig. 2]

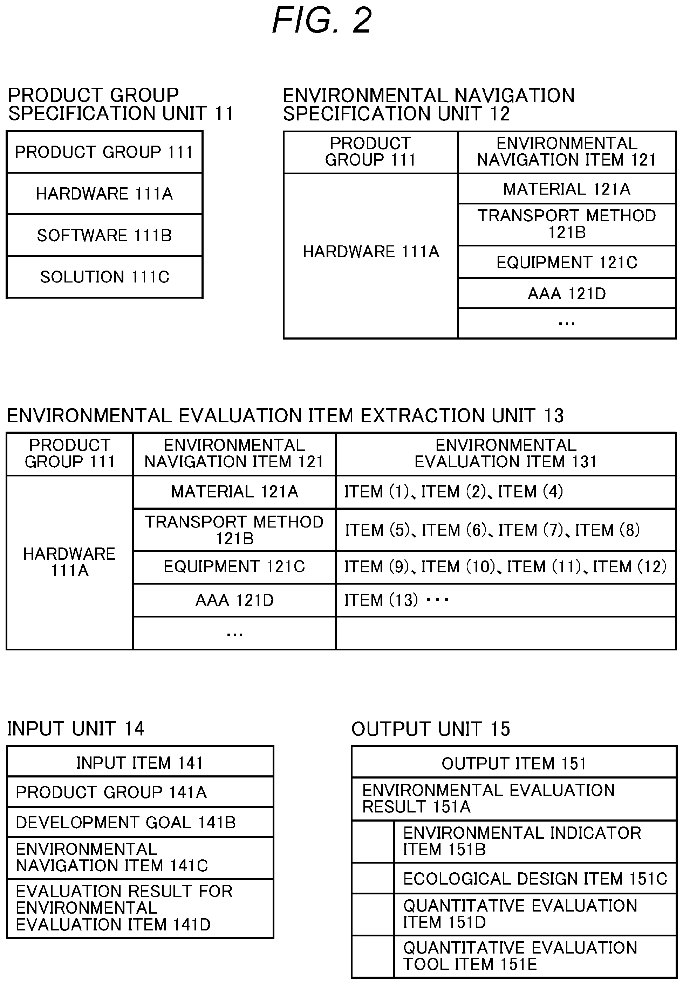

   Fig. 2 is a diagram showing information handled by each part configuring a processing unit 101 in an embodiment of the present invention.
[Fig. 3]

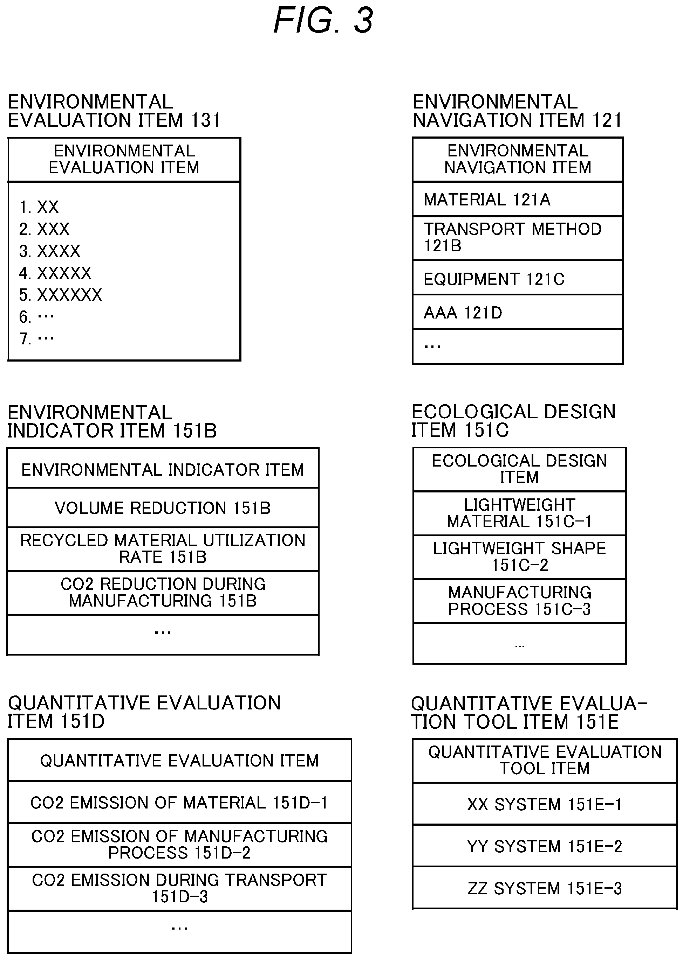

   Fig. 3 is a diagram showing information of a storage unit 201 in an embodiment of the present invention.
[Fig. 4]

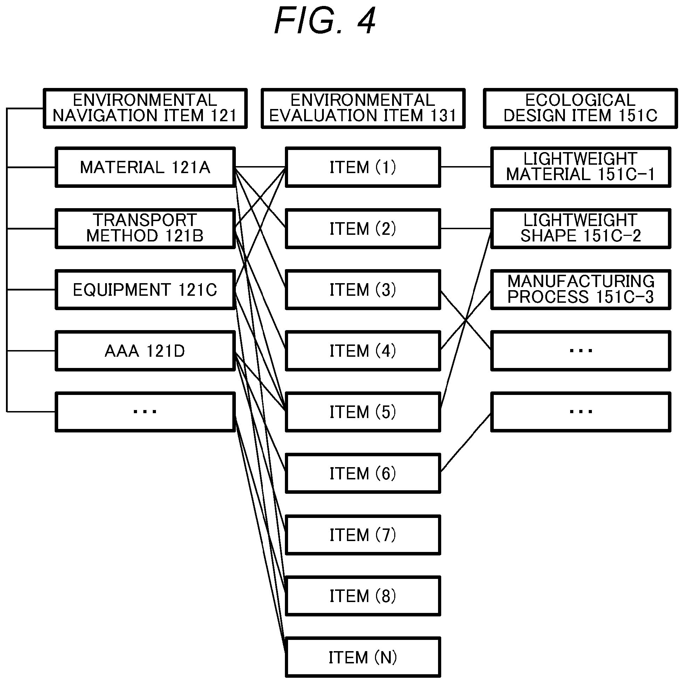

   Fig. 4 is a diagram showing that an environmental navigation item 121, an environmental evaluation item 131, and an ecological design item 151C are linked with each other in an embodiment of the present invention.
[Fig. 5]

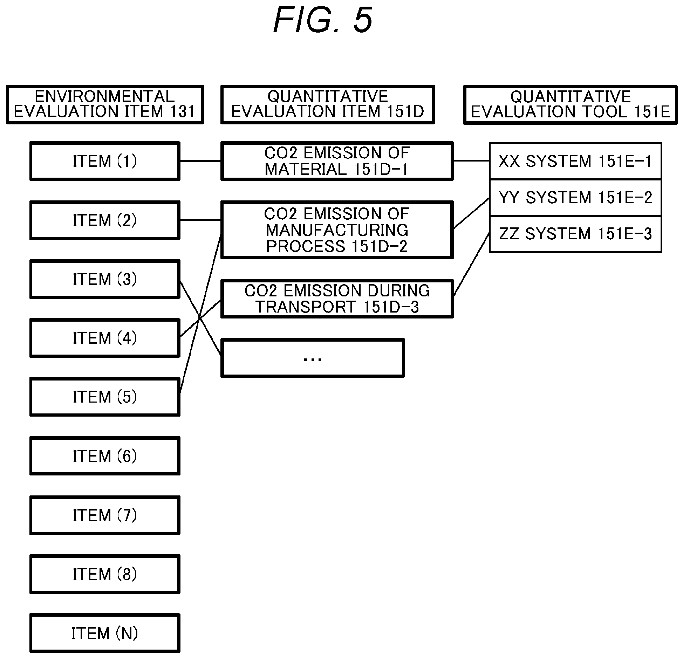

   Fig. 5 is a diagram showing that an environmental evaluation item 131, a quantitative evaluation item 151D, and a quantitative evaluation tool are linked with each other in an embodiment of the present invention.
[Fig. 6]

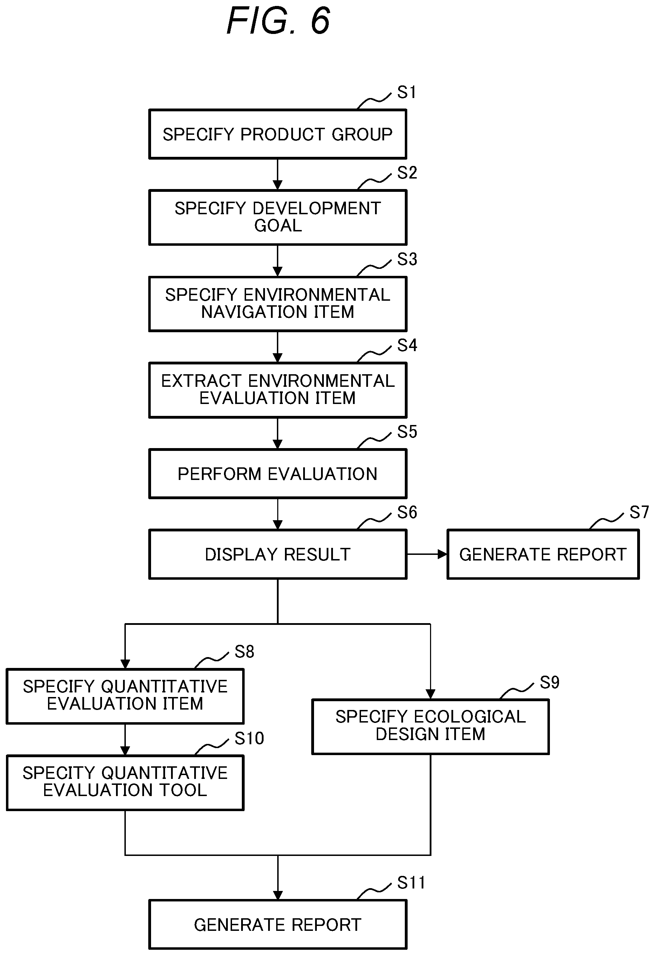

   Fig. 6 is a flowchart showing a processing flow in an embodiment of the present invention.
[Fig. 7]

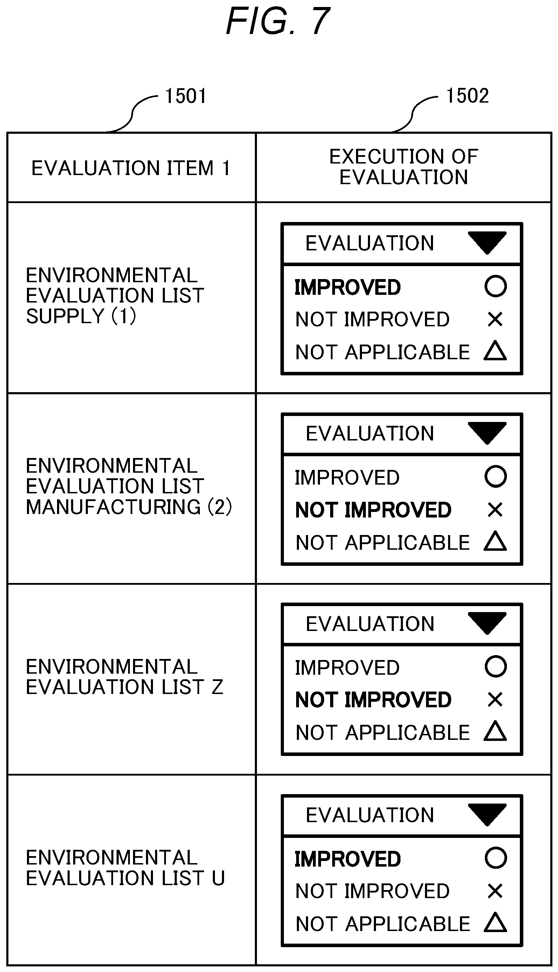

   Fig. 7 is a diagram showing a display screen of an output unit 15 in step S6 in an embodiment of the present invention.
[Fig. 8]

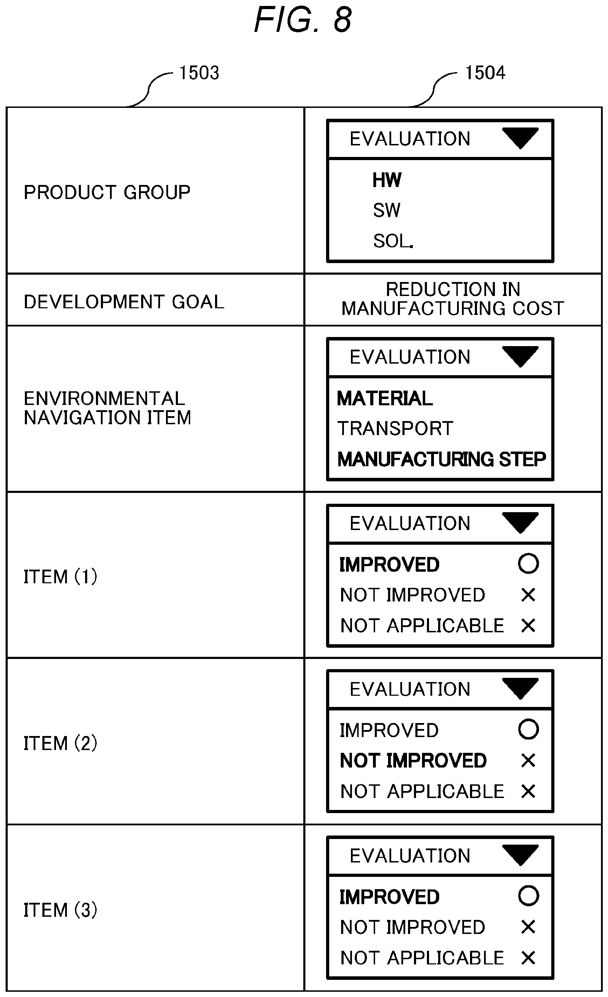

   Fig. 8 is a diagram showing another example of a display screen of an output unit 15 in an embodiment of the present invention.
[Fig. 9]

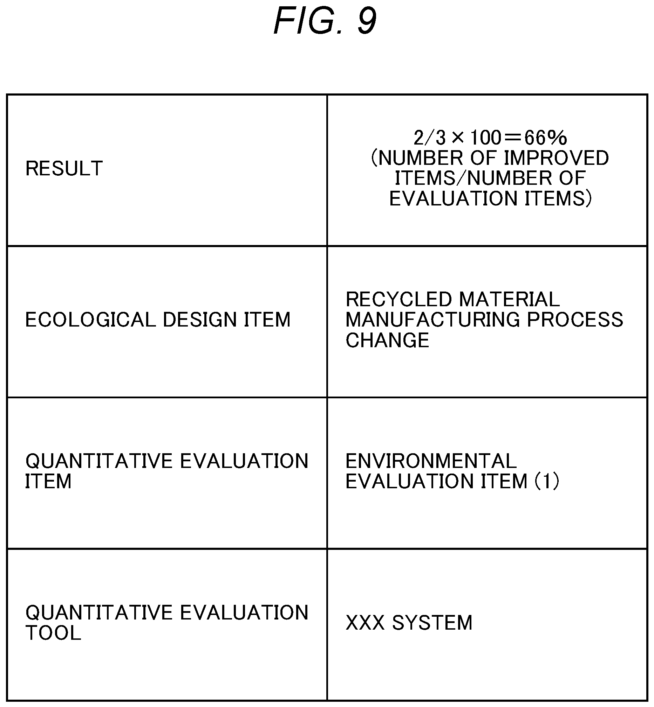

   Fig. 9 is a diagram showing a report in an embodiment of the present invention.
[Fig. 10]

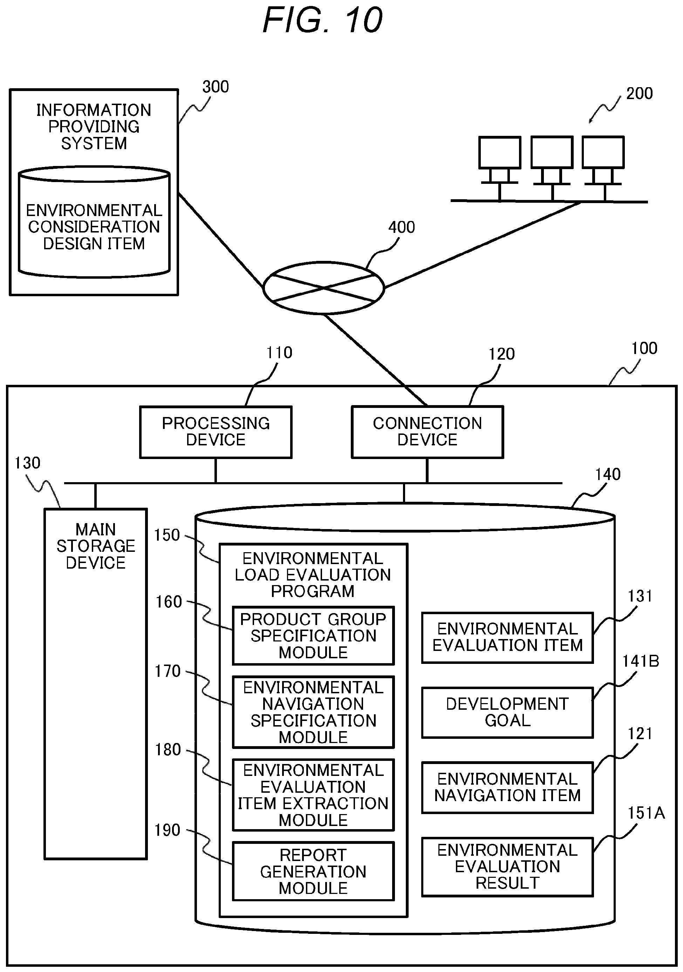

   Fig. 10 is a diagram showing an example of an environmental load evaluating device 100 according to an embodiment of the present invention.

### Description of Embodiments

An embodiment of the present invention will be described below. In this embodiment, environmental loads of a plurality of product groups are evaluated as an example of an object. Fig. 1 is a functional block diagram of an environmental load evaluating device 100 in this embodiment. The environmental load evaluating device 100 includes a processing unit 101 and a storage unit 201. The processing unit 101 executes a processing flow shown in Fig. 6. For this reason, the processing unit 101 includes a product group specification unit 11, an environmental navigation specification unit 12, an environmental evaluation item extraction unit 13, an input unit 14, an output unit 15, and a report generation unit 16. An outline of each of these components will be described below with reference to Fig. 2. Fig. 2 is a diagram showing information handled by each part configuring the processing unit 101 in this embodiment. First, the product group specification unit 11 specifies a product group 111 to be evaluated in this embodiment. For example, as shown in Fig. 2, the product group specification unit 11 specifies, as the product group 111, hardware 111A, software 111B and solutions 111C.

The environmental navigation specification unit 12 also specifies an environmental navigation item 121 that indicates a development category in the specified product group 111 and with which there has been association in advance. As shown in Fig. 2, the environmental navigation specification unit 12 specifies, for example, a material 121A, a transport method 121B, equipment 121C, AAA 121D, ... as the environmental navigation item 121 in the hardware 111A of the product group 111. The environmental navigation item 121 is an item that may affect an environmental load in the life cycle of a product.

An environmental evaluation item extraction unit 13 extracts an environmental evaluation item 131 for each specified environmental navigation item 121 and associates it with the environmental navigation item 121. That is, the environmental evaluation item extraction unit 13 extracts items to be evaluated for an environmental load with respect to the environmental navigation item 121 such as the material 121A, the transport method 121B, and the equipment 121C and AAA 121D and associates them. For example, in the environmental navigation item 121, the material 121A is associated with items (1), (2), and (4).

The input unit 14 also receives an input item 141 from a user of the environmental load evaluating device 100. As shown in Fig. 2, the input item 141 includes a product group 141A to be evaluated, a development goal 141B in the product group 141A, an environmental navigation item 141C, and an evaluation result 141D for the environmental evaluation item.

Further, the output unit 15 outputs an environmental evaluation result 151A for the product group 141A as an output item 151 in accordance with the input item 141. For example, the environmental evaluation result 151A is configured with an environmental indicator item 151B, an ecological design item 151C, a quantitative evaluation item 151D, and a quantitative evaluation tool item 151E.

In addition, the storage unit 201 stores the environmental evaluation item 131, the development goal 141B, the environmental navigation item 121, and the environmental evaluation result 151A. These pieces of information are information handled in a process flow shown in Fig. 6, and show the contents reflecting environmental regulations of a product, and the like.

Fig. 3 is a diagram showing information stored in the storage unit 201 in this embodiment. First, the environmental evaluation item 131 is the information also shown in Fig. 2, and is associated with the environmental navigation item 121 by the environmental evaluation item extraction unit 13. Here, the environmental evaluation item 131 is an evaluation item for the entire life cycle of the product, and is configured with evaluation items for a material, design, production, manufacturing, transport, operation, maintenance and disposal. In addition, the environmental evaluation items 131 are collected from existing environmental evaluation items or created from environmental consideration design items published by the Ministry of the Environment, and are the information shown in Fig. 2, and the environmental evaluation items 131 are made into a list. In addition, the environmental navigation item 121 is shown in Fig. 2 and is created in advance as an item indicating an evaluation unit of environmental load evaluation in the entire product life cycle.

The environmental evaluation item extraction unit 13 can create the environmental evaluation item 131 as an item to be reflected on the design from the past environmental goals. The environmental evaluation item extraction unit 13 can group the environmental evaluation items into a predetermined number or more, for example, five or more items. That is, the items can be controlled by product provision, such as product planning, material selection, production, manufacturing, and operation and a manufacturing company. Furthermore, the environmental evaluation item 131 can also be grasped as an item that can reflect recycling and reuse design indices. In addition, this grouping method includes classification by product life cycle levels, searching for a keyword of the past development item, and classification into life cycles.

The environmental indicator item 151B to the quantitative evaluation tool item 151E are information configuring the environmental evaluation result 151A as shown in Fig. 2. First, the environmental indicator item 151B is an indicator that affects (particularly reduces) an environmental load of a product, and is configured with a volume reduction 151B-1, a recycled material utilization rate 151B-2, and a CO2 reduction during manufacturing 151B-3 in this embodiment. The volume reduction 151B-1 indicates the degree of reduction in the related art which contributes to a reduction in environmental load in a product. The recycled material utilization rate 151B-2 indicates a utilization rate of a recycled material that contributes to a reduction in environmental load in a product. The CO2 reduction during manufacturing 151B-3 indicates a CO2 reduction during manufacturing of a product that contributes to a reduction in environmental load.

In addition, the ecological design item 151C indicates an environmental indicator in the design of a product. For this reason, for example, the ecological design item 151C is configured with a lightweight material 151C-1, a lightweight shape 151C-2, and a manufacturing process 151C-3. The lightweight material 151C-1 indicates a lightweight material used for a product. The lightweight shape 151C-2 shows a shape that contributes to light weight in the shape of the product. Furthermore, the manufacturing process 151C-3 indicates a manufacturing process of the product. Regarding these ecological design items 151C, ecological design items of the product can be prepared or collected from environmental consideration design items of the Ministry of the Environment.

In addition, the quantitative evaluation item 151D indicates an item capable of quantitative evaluation for an environmental load of the basis of the environmental evaluation item 131. For this reason, in this embodiment, for example, the quantitative evaluation item 151D is configured with a CO2 emission of material 151D-1, a CO2 emission of manufacturing process 151D-2, and a CO2 emission during transport 151D-3. Furthermore, the quantitative evaluation tool item 151E indicates an evaluation tool used to perform environmental evaluation. In this embodiment, for example, as the quantitative evaluation tool item 151E, an XX system 151E-1, a YY system 151E-2, and a ZZ system 151E-3 are used.

Here, the items of these pieces of information are linked, in other words, associated with each other. Fig. 4 is a diagram showing that the environmental navigation item 121, the environmental evaluation item 131, and the ecological design item 151C are associated in this embodiment. As shown in Fig. 4, for example, the material 121A of the environmental navigation item 121 is associated with the items (1), (2) and (3) of the environmental evaluation item 131. Further, in the transport method 121B of the environmental navigation item 121, the items (1), (4) and (5) of the environmental evaluation item 131 are linked with each other. Each item (121A to) of the environmental navigation item 121 is linked with any one item of the environmental evaluation items 131.

In addition, the item (1) of the environmental evaluation item 131 is linked with the lightweight material 151C-1 of the ecological design item 151C. The item (2) of the environmental evaluation item 131 is linked with the lightweight shape 151C-2 of the ecological design item 151C. As described above, each item of the environmental evaluation item 131 is linked with any one of the ecological design items 151C.

In addition, Fig. 5 is a diagram showing that the environmental evaluation item 131, the quantitative evaluation item 151D, and the quantitative evaluation tool in this embodiment are linked with each other. As shown in Fig. 5, for example, the item (1) of the environmental evaluation item 131 is linked with the CO2 emission 151D-1 of the material of the quantitative evaluation item 151D. The CO2 emission 151D-1 of this material is also linked with the XX System 151E-1 of the quantitative evaluation tool item 151E. In this manner, at least a portion of the environmental evaluation item 131 is linked with the quantitative evaluation item 151D, and each item of the quantitative evaluation item 151D is linked with any one of the quantitative evaluation tool items 151E.

Next, a processing flow of this embodiment will be described. Fig. 6 is a flowchart showing a processing flow in this embodiment. First, in step S1, the product group specification unit 11 specifies the product group 141A which is a target of this processing. For this, the product group specification unit 11 causes the output unit 15 to display a candidate product group and specify it in response to a user's selection with respect to the input unit 14.

Further, in step S2, the environmental navigation specification unit 12 specifies the development goal 141B corresponding to the specified product group. For this, the product group specification unit 11 specifies the development goal 141B corresponding to the user's designation with respect to the input unit 14.

Further, in step S3, the environmental navigation specification unit 12 specifies the environmental navigation item 141C. For this, the environmental navigation specification unit 12 displays the environmental navigation item 121 in Fig. 3 on the output unit 15. Then, the environmental navigation specification unit 12 specifies the environmental navigation item 141C in accordance with the user's selection with respect to the input unit 14. As a result, in the environmental navigation item 121 in Fig. 3, any one of the materials 121A ... is selected.

Further, in step S4, the environmental evaluation item extraction unit 13 extracts the environmental evaluation item 131 linked with the specified environmental navigation item 141C. As shown in Fig. 4, each item in the environmental navigation item 121 is linked with each item ((1) to (N)) of the environmental evaluation item 131. Consequently, the environmental evaluation item extraction unit 13 extracts the environmental evaluation item 131 by using this correspondence. In addition, the environmental evaluation item 131 is an evaluation unit when evaluating an environmental load of a product. For this reason, the extracted environmental evaluation item 131 can be used as an evaluation item for products similar to a target product, for example, other products in the product group specified in step S1. Thus, steps S2 and S3 in other products can be omitted. That is, standardization and normalization of the environmental evaluation item 131 can be achieved.

In step S4, the environmental evaluation item extraction unit 13 may extract the environmental evaluation item 131 by using results of text mining and analysis and a supply result in a product. The environmental evaluation item extraction unit 13 executes the text mining and analysis on environmental evaluation items and evaluation results of environmental loads of products similar to the target product. In addition, the supply result indicates environmental evaluation items and evaluation results at the time of supply in a product similar to the target product.

Further, in step S5, the input unit 14 receives an evaluation result on an environmental load for each of the extracted items. Then, in step S6, the output unit 15 displays the result of the evaluation in step S5.

In step S7, the report generation unit 16 generates a report related to environmental evaluation on the basis of the evaluation result in step S5. The report generation unit 16 has each item of the output item 151 shown in Fig. 2. This report may be in a format similar to an existing report. Furthermore, the contents of this report are similar to the environmental evaluation results. This step may be omitted.

In step S8, the report generation unit 16 specifies the quantitative evaluation item 151D. For this, the report generation unit 16 specifies the quantitative evaluation item 151D linked with the environmental evaluation item 131 extracted in step S4. That is, correspondence between the items of the quantitative evaluation item 151D and the items (1) to (N) of the environmental evaluation item 131 shown in Fig. 5 is used. Then, the report generation unit 16 may display the specified quantitative evaluation item 151D on the output unit 15.

In step S9, the report generation unit 16 specifies the ecological design item 151C linked with the environmental evaluation item 131 extracted in step S4. That is, the correspondence between the environmental evaluation item 131 and the ecological design item 151C shown in Fig. 4 is used. Then, the report generation unit 16 may display the specified ecological design item 151C on the output unit 15.

Further, in step S10, the report generation unit 16 specifies the quantitative evaluation tool item 151E linked with the quantitative evaluation item 151D specified in step S8. For this, the correspondence between the quantitative evaluation item 151D and the quantitative evaluation tool item 151E shown in Fig. 5 is used. Then, the report generation unit 16 may display the specified quantitative evaluation tool item 151E on the output unit 15.

Then, in step S11, the report generation unit 16 generates a report. The report includes the evaluation result in step S6, the quantitative evaluation item 151D specified in step S8, the ecological design item 151C specified in step S9, and the quantitative evaluation tool item 151E specified in step S10. It is desirable that the report generation unit 16 display the generated report in the output item 151 shown in Fig. 2 on the output unit 15.

The flowchart has been described above, and the display in the processing flow will be described below.

First, Fig. 7 is a diagram showing a display screen of the output unit 15 in step S6 in this embodiment. In Fig. 7, the display screen is configured with an evaluation item 1 input area 1501 and an evaluation execution area 1502. Here, the evaluation item 1 input area 1501 indicates the environmental evaluation item 131 extracted in step S4. The evaluation execution area 1502 is a display area for receiving the evaluation result in step S5. Each item in the evaluation execution area 1502 is associated with each item in the evaluation item 1 input area 1501. Here, in this embodiment, as shown in Fig. 7, the evaluation result can be selected from three options: improved, not improved, and not applicable. The user can evaluate each displayed evaluation item 1 by using the display screen of Fig. 7. That is, the input unit 14 receives the user's selection of the evaluation result for the evaluation execution area 1502 of the output unit 15.

Fig. 8 is a diagram showing another example of the display screen of the output unit 15 in this embodiment. In Fig. 8, the display screen is configured with an evaluation target area 1503 and an evaluation execution area 1504. In the display screen of Fig. 8, a product group, a development goal, and an environmental navigation item are added as compared to Fig. 7. That is, Fig. 8 shows a display screen for also performing an input in steps S1 to S3 in addition to the input of the evaluation result in step S6. In Fig. 8, hardware (HW) is selected as the product group. This is executed in step S1. Further, as the development goal, a reduction in manufacturing cost has been input. Further, a material and a manufacturing step are selected as the environmental navigation item.

By specifying the product group, the development goal, and the environmental navigation item, the environmental evaluation item extraction unit 13 extracts the items (1), (2), and (3) of the environmental evaluation item 131 and display them in the evaluation target area 1503 of the output unit 15 in step S4. Then, in step S5, the input unit 14 receives the user's selection from among improved, not improved, and not applicable for the items (1), (2), and (3) of the environmental evaluation item.

Then, the report generation unit 16 generates a report shown in Fig. 9, and the output unit 15 displays it. Fig. 9 is a diagram showing a report in this embodiment. This report shows 66% as a result of environmental evaluation. This is calculated by the report generation unit 16 in accordance with the number of improved items / the number of evaluation items × 100. Here, the improved items indicate the number of items selected as having been improved as the evaluation in Figs. 7 and 8. In addition, the number of evaluation items means a total number of environmental evaluation items shown in Figs. 7 and 8. In this manner, the result in Fig. 9 indicates a ratio of items selected as having been improved with respect to the items selected as having been improved as an evaluation. In the example shown in Fig. 9, two of the three items have been improved, resulting in 66%. It is desirable that the report generation unit 16 store the report including the result in the storage unit 201 as the environmental evaluation result 151A.

Then, the report generation unit 16 presents a reproduction material and a manufacturing process change as the ecological design item from the result of the evaluation item, and presents the item (1) of the environmental evaluation item as the quantitative evaluation item. Further, the report generation unit 16 presents the XXX system as an evaluation tool for the quantitative evaluation item.

Next, the environmental load evaluating device 100 of this embodiment can be implemented as a computer. Consequently, the implementation of the environmental load evaluating device 100 will be described below. Fig. 10 is a diagram showing an example of the implementation of the environmental load evaluating device 100 in this embodiment.

In Fig. 10, the environmental load evaluating device 100 is connected to a terminal device group 200 and an information providing system 300 via a network 400. In this manner, the environmental load evaluating device 100 can be implemented by a server referred to as a cloud or an in-house system, even in a computer.

Fig. 10 shows a hardware configuration of the environmental load evaluating device 100.

That is, the environmental load evaluating device 100 includes a processing device 110, a connection device 120, a memory 130, and a sub-storage device 140, and these are connected to each other via a communication path.

First, the processing device 110 can be implemented by a processor such as a central processing unit (CPU), and executes an operation in accordance with an environmental load evaluation program 150 stored in the sub-storage device 140, which will be described later.

The connection device 120 also has an interface function with other devices. That is, the connection device 120 receives a user's input in the terminal device group 200, and outputs contents to be displayed in the terminal device group 200. In this case, the terminal device group 200 functions as the input unit 14 and the output unit 15.

Further, the memory 130 and the sub-storage device 140 correspond to the storage unit 201 of Fig. 1. Then, the memory 130 expands the environmental load evaluation program 150 stored in the sub-storage device 140 and information used for processing in the processing device 110. Further, the sub-storage device 140 can be implemented by a so-called storage. Then, the sub-storage device 140 stores the environmental load evaluation program 150, the environmental evaluation item 131, the development goal 141B, the environmental navigation item 121 and the environmental evaluation result 151A. Further, the sub-storage device 140 can be implemented by various storage media such as an external hard disk drive (HDD), a solid state drive (SSD), and a memory card. In addition, the sub-storage device 140 may be implemented as a device separate from the environmental load evaluating device 100, such as a file server.

Here, the environmental load evaluation program 150 is configured with, for each of the functions, a product group specification module 160, an environmental navigation specification module 170, an environmental evaluation item extraction module 180, and a report generation module 190. Each of these modules may be implemented by an individual program or a combination of some programs. The environmental load evaluation program 150 may also be implemented as a function of a design program for designing a product, for example, a CAD program, and may be implemented as a separate program independently of the design program. In the latter case, a design program can be provided in a device separate from the environmental load evaluating device 100.

In addition, the configuration shown in Fig. 1 for executing the same functions as the modules is as follows.
Product group specification module 160: Product group specification unit 11
Environmental navigation specification module 170: Environmental navigation specification unit 12
Environmental evaluation item extraction module 180: Environmental evaluation item extraction unit 13
Report generation module 190: Report generation unit 16

For this reason, the processing device 110 executes processes of the product group specification unit 11, the environmental navigation specification unit 12, the environmental evaluation item extraction unit 13, and the report generation unit 16 in this embodiment in accordance with the environmental load evaluation program 150. The environmental load evaluation program 150 can be stored in a storage medium.

In addition, the terminal device group 200 is a terminal device group operated by a user and can be implemented by a computer. The terminal device group 200 functions as the input unit 14 and the output unit 15 in Fig. 1 as described above. Although the terminal device group is used in this embodiment, a single terminal device may be used.

In addition, the information providing system 300 is a computer system that stores and provides the above-described environmental consideration design item. This environmental consideration design item is used to create the environmental evaluation item 131 as described above. For example, the environmental evaluation item extraction unit 13 creates the environmental evaluation item 131 by using the environmental consideration design item acquired from the information providing system 300. In the above embodiment, the evaluation results are linked with products or parts, the history is managed, and environmental property evaluation of products or parts is collected from the past history, and thus it is possible to reduce the burden on the operator in the evaluation. Furthermore, according to this embodiment, it is possible to perform standardization and reliability assurance of environmental goal settings, provision of rapid environmental load evaluation of products, qualitative evaluation and quantitative evaluation.

While this embodiment has been described above, the present invention is not limited to this embodiment, and includes various modification examples and application examples. For example, the report generation unit 16 associates the environmental evaluation item 131 with an environmental calculation tool, calculates environmental properties by the environmental calculation tool, and digitizes it. In this case, the function of the environmental calculation tool may be provided in the environmental load evaluating device 100, or the environmental calculation tool may be implemented as another device. In this case, the report generation unit 16 may be configured to record the evaluation results for the environmental evaluation items and the results of the environmental calculation tool.

Further, the evaluation results for the environmental evaluation items calculated from the environmental calculation tool may be linked with a part table (BOM/BOP) of a product, that is, recorded on the part table. In this case, the environmental evaluation may be calculated for a newly developed product by using a part table linked with environmental evaluation results. The above is executed by the report generation unit 16.

### Reference Signs List

- 11: Product group specification unit
- 12: Environmental navigation specification unit
- 13: Environmental evaluation item extraction unit
- 14: Input unit
- 15: Output unit
- 16: Report generation unit
- 100: Environmental load evaluating device
- 101: Processing unit
- Product group: 111
- 121: Environmental navigation item
- 131: Environmental evaluation item
- 141: Input item
- 151: Output item
- 201: Storage unit

## Claims

1. An environmental load evaluating device for evaluating an environmental load of a product, the environmental load evaluating device comprising:
a product group specification unit configured to specify a product group that is an evaluation target for the environmental load;
an environmental navigation specification unit configured to specify a development goal corresponding to the specified product group and specify a plurality of environmental navigation items corresponding to the specified development goal, the plurality of environmental navigation items being items that may affect environmental loads in a life cycle of the product group; and
an environmental evaluation item extraction unit configured to extract environmental evaluation items associated with the environmental navigation items and being evaluation units in evaluation of the environmental load.

2. The environmental load evaluating device according to claim 1, further comprising:
an input unit configured to receive evaluation results for the environmental evaluation items from a user; and
a report generation unit configured to generate a report corresponding to the evaluation results.

3. The environmental load evaluating device according to claim 1,
wherein the environmental evaluation item extraction unit creates the environmental evaluation items in advance from environmental consideration design items.

4. The environmental load evaluating device according to claim 3,
wherein the environmental evaluation item extraction unit groups the environmental evaluation items for each of product planning, material selection, production, manufacturing, and operation of the product.

5. The environmental load evaluating device according to claim 1,
wherein the environmental evaluation item extraction unit extracts the environmental evaluation items by text mining for environmental evaluation items and evaluation results of environmental loads of products similar to the product.

6. The environmental load evaluating device according to claim 1,
wherein the environmental navigation specification unit specifies the environmental navigation items for each of software, hardware, and solutions as the product group.

7. An environmental load evaluation method of evaluating an environmental load of a product by using an environmental load evaluating device, the environmental load evaluation method comprising:
specifying a product group that is an evaluation target for the environmental load by a product group specification unit;
specifying a development goal corresponding to the specified product group and specifying a plurality of environmental navigation items corresponding to the specified development goal by an environmental navigation specification unit, the plurality of environmental navigation items being items that may affect environmental loads in a life cycle of the product group; and
extracting environmental evaluation items associated with the environmental navigation items and being evaluation units in evaluation of the environmental load by an environmental evaluation item extraction unit.

8. The environmental load evaluation method according to claim 7, further comprising:
receiving evaluation results for the environmental evaluation items from a user by an input unit; and
generating a report corresponding to the evaluation results by a report generation unit.

9. The environmental load evaluation method according to claim 7,
wherein the environmental evaluation item extraction unit creates the environmental evaluation items in advance from environmental consideration design items.

10. The environmental load evaluation method according to claim 9,
wherein the environmental evaluation item extraction unit groups the environmental evaluation items for each of product planning, material selection, production, manufacturing, and operation of the product.

11. The environmental load evaluation method according to claim 7,
wherein the environmental evaluation item extraction unit extracts the environmental evaluation items by text mining for environmental evaluation items and evaluation results of environmental loads of products similar to the product.

12. The environmental load evaluation method according to claim 7,
wherein the environmental navigation specification unit specifies the environmental navigation items for each of software, hardware, and solutions as the product group.
